# EUROPÄISCHE PATENTSCHRIFT

(11) **EP 2 647 982 B1**
(45) Veröffentlichungstag und Bekanntmachung des Hinweises auf die Patenterteilung: **02.09.2020**
(21) Anmeldenummer: 13162345.6
(22) Anmeldetag: 04.04.2013
(51) Int. Cl.: G01N 21/64, G02B 21/16

(54) **VERFAHREN UND VORRICHTUNG ZUM BESTIMMEN EINES KRITISCHEN WINKELS EINES ANREGUNGSLICHTSTRAHLS**
METHOD AND DEVICE FOR DETERMINING A CRITICAL ANGLE OF AN EXCITATION LIGHT BEAM
PROCÉDÉ ET DISPOSITIF DE DÉTERMINATION D'UN ANGLE CRITIQUE D'UN FAISCEAU LUMINEUX EXCITATEUR

(30) Priorität: 05.04.2012 DE 102012102983
(43) Veröffentlichungstag der Anmeldung: 09.10.2013
(73) Patentinhaber: Carl Zeiss Microscopy GmbH, 07745 Jena (DE)
(72) Erfinder: ZUR NIEDEN, Robin, 37081 Göttingen (DE)
(74) Vertreter: Sticht, Andreas

(56) Entgegenhaltungen:
- DE-A1-102006 021 996
- US-A1- 2011 057 093
- MARTIN OHEIM ET AL: "TOPICAL REVIEW; Non-linear evanescent-field imaging; Topical Review", JOURNAL OF PHYSICS D: APPLIED PHYSICS, INSTITUTE OF PHYSICS PUBLISHING LTD, GB, vol. 38, no. 10, 21 May 2005 (2005-05-21), pages R185-R197, XP020083069, ISSN: 0022-3727, DOI: 10.1088/0022-3727/38/10/R01

## Beschreibung

Die vorliegende Erfindung betrifft Verfahren und Vorrichtungen zum Bestimmen eines kritischen Winkels einer Totalreflexion eines Anregungslichtstrahls in einer Mikroskopanordnung, insbesondere eine TIRF-Mikroskopanordnung (vom englischen "Total Internal Reflection Fluorescence", d.h. interne Totalreflexionsfluoreszenzmikroskopie).

Die interne Totalreflexionsfluoreszenzmikroskopie ist ein Verfahren der Lichtmikroskopie, bei welchem ein Anregungslichtstrahl typischerweise an einer Grenze von einem Deckglas zu einer zu untersuchenden Probe totalreflektiert wird. Dies erzeugt ein so genanntes evaneszentes (abklingendes) Feld in der Probe, welches die Probe zur Fluoreszenz anregen kann. Die Eindringtiefe des evaneszenten Feldes hängt dabei von dem genauen Einfallswinkel des anregenden Lichtstrahls ab.

Da der kritische Winkel für die Totalreflexion, d.h. der Grenzwinkel, bei welchem ein transmittierter Lichtstrahl verschwindet, von den Brechungsindizes der beteiligten Materialien abhängt, ist er je nach Art der verwendeten Proben nicht unbedingt a priori bekannt. Daher ist es wünschenswert, diesen kritischen Winkel bestimmen zu können.

Diesbezüglich offenbart die US 2011/0057093 A1 ein Verfahren, bei welchem die Intensität der optischen Antwort der Probe in Abhängigkeit von einem Beleuchtungswinkel ausgewertet wird, wobei zur vergrößerten Robustheit des Verfahrens eine Auswertung in einer Pupillenebene erfolgt, was teilweise zusätzliche abbildende Elemente erfordert.

US 2011/057093 A1 offenbart ein Verfahren zur Kalibration einer Ablenkeinheit in einem TIRF-Mikroskop, durch welche ein Einfallswinkel von Anregungslicht auf eine Probe justiert wird, wobei eine Einstellung so gewählt wird, das der Einfallswinkel definitiv größer oder kleiner als ein antizipierter kritischer Winkel für Totalreflektion des Anregungslichts auf einer Oberfläche einer verwendeten Probe ist, und wobei der Einfallswinkel verändert wird, indem die Einstellung der Ablenkeinheit in Richtung eines erwarteten kritischen Winkels verändert wird, und eine Intensität der optischen Antwort der Probe für jede Einstellung des Einfallswinkels gemessen wird, bis die optische Antwort eine Flanke aufweist, wobei die zu der Flanke zugehörige Einstellung der Ablenkungseinheit als die Einstellung für den kritischen Winkel der verwendeten Probe gespeichert wird.

DE 10 2006 021996 A1 offenbart ein Mikroskop zur Totalinternen-Reflexions-Mikroskopie, welches dadurch gekennzeichnet ist, dass in einem Beleuchtungsstrahlengang Mittel zum zumindest teilweisen Auskoppeln eines zurückkehrenden Reflexionslichts aus dem Beleuchtungsstrahlengang und Mittel zum Detektieren des ausgekoppelten Reflexionslichts vorgesehen sind und dass aus dem Strahlengang des ausgekoppelten Reflexionslichts quantifizierbare und/oder qualifizierbare Parameter von evaneszenten Beleuchtung und/oder des in einer Probe entstehenden evaneszenten Feldes ableitbar sind. Ebenfalls ist ein Verfahren offenbart, welches zur Ableitung quantifizierbarer und/oder qualifizierbarer Parameter der evaneszenten Beleuchtung und/oder des in der Probe (5) entstehenden evaneszenten Feldes dient.

Martin Oheim und Florian Schapper 2005 J. Phys. D: Appl. Phys. 38 R185, veröffentlicht am 6. Mai 2005, doi: 10.1088/0022-3727/38/10/R01 beschreiben, dass in der experimentellen Praxis bei einem Durchstimmen eines Winkels über einen kritischen Winkel hinaus ein schneller Verlust einer Bildhelligkeit beobachtet werden kann.

Es ist daher eine Aufgabe, Verfahren und Vorrichtungen zur Bestimmung eines derartigen kritischen Winkels bereitzustellen, welche einfach zu implementieren sind, bevorzugt ohne zusätzliche optische Elemente, und welche robust arbeiten.

Diesbezüglich wird ein Verfahren gemäß Anspruch 1 sowie eine Vorrichtung gemäß Anspruch 8 bereitgestellt. Die Unteransprüche definieren weitere Ausführungsbeispiele.

Erfindungsgemäß wird ein Verfahren bereitgestellt, umfassend:
Beleuchten einer Probe mit einem Anregungslichtstrahl,
Aufnehmen von Bildern der Probe für eine Vielzahl von verschiedenen Einfallswinkeln des Anregungslichtstrahls, und
Bestimmen eines kritischen Winkels der Totalreflexion des Anregungslichtstrahls in Abhängigkeit von den aufgenommenen Bildern.

Durch eine derartige Bestimmung des kritischen Winkels auf Basis der Bilder ist es nicht nötig, zur Erhöhung der Robustheit eine Pupillenebene zu betrachten. Zudem kann die Bildaufnahme mit einem ohnehin vorgesehenen Bildsensor erfolgen, so dass keine zusätzlichen Elemente benötigt werden.

Das Bestimmen des kritischen Winkels erfolgt dabei auf Basis einer Kontrastanalyse der Bilder. Dabei kann insbesondere ausgenutzt werden, dass sich beim Überschreiten des Winkels der Totalreflexion Kontrastverhältnisse, insbesondere Intensitätsverhältnisse, ändern können.

Bei einem Ausführungsbeispiel werden die Bilder von verschiedenen Bildebenen innerhalb der Probe aufgenommen, beispielsweise von zwei verschiedenen Bildebenen, und das Bestimmen des kritischen Winkels kann auf Basis der Bilder der verschiedenen Bildebenen, beispielsweise durch Vergleichen von Bildern bei gleichen Einfallswinkeln und verschiedenen Bildebenen, erfolgen. Insbesondere kann so ein Ergebnis verifiziert werden, welches auf Basis von Bildern einer einzigen Bildebene erhalten wurde.

Das Verfahren kann auch ein Vergleichen von Bildparametern, beispielsweise einer mittleren aufgenommenen Fluoreszenzintensität in einem Gebiet zwischen aufeinanderfolgenden Beleuchtungswinkeln der Vielzahl von Beleuchtungswinkel, erfolgen. Zusätzlich oder alternativ können zumindest in einem Teil der Bilder verschiedene Bereiche, insbesondere eines Bereiches innerhalb eines von einem evaneszenten Feld erfassten Gebiets und eines Bereichs außerhalb hiervon, ausgewertet werden.

Ein Verhältnis von Bildintensitäten kann insbesondere entlang eines oder mehrerer Linienprofile anhand von Gesamtbildern oder anhand vorgegebener Gebiet des Bilds erfolgen.

Das Verfahren kann dabei automatisch oder auch halbautomatisch erfolgen. Beispielsweise kann eine Änderung des Beleuchtungswinkels und/oder eine Änderung der Bildebene der Detektion, d.h. der Bildaufnahme, automatisch erfolgen, kann aber auch in einem interaktiven Verfahren durch einen Benutzer erfolgen.

Im Folgenden werden Ausführungsbeispiele der Erfindung unter Bezugnahme auf die beigefügte Zeichnung näher erläutert. Es zeigen:
Fig. 1 ein Schemadiagramm einer Vorrichtung gemäß einem Ausführungsbeispiel,
Fig. 2 ein Flussdiagramm eines Verfahrens gemäß einem Ausführungsbeispiel,
Fig. 3 schematische Beispielbilder zur Veranschaulichung eines Ausführungsbeispiels der Erfindung,
Fig. 4 einen Ausschnitt aus einer Vorrichtung gemäß einem Ausführungsbeispiel zur Veranschaulichung einer Aufnahme in verschiedenen Bildebenen bei manchen Ausführungsbeispielen,
Fig. 5 Graphen zur Veranschaulichung der Bestimmung eines kritischen Winkels bei manchen Ausführungsbeispielen, und
Fig. 6 und 7 Beispielsmessungen in zwei verschiedenen Bildebenen.

Im Folgenden wird die vorliegende Erfindung anhand von Ausführungsbeispielen näher erläutert. Es ist zu bemerken, dass diese Ausführungsbeispiele nur der Veranschaulichung dienen und nicht als einschränkend auszulegen sind. Merkmale verschiedener Ausführungsbeispiele können miteinander kombiniert werden, sofern nichts anderes angegeben ist. Auf der anderen Seite bedeutet eine Beschreibung eines Ausführungsbeispiels mit einer Vielzahl von Merkmalen nicht, dass alle diese Merkmale zur Ausführung der Erfindung notwendig sind. Insbesondere können bei anderen Ausführungsbeispielen manche Merkmale der beschriebenen Ausführungsbeispiele weggelassen sein oder durch alternative Merkmale ersetzt werden.

Wie auf dem Gebiet der Optik üblich, wird unter einem Einfallswinkel eines Lichtstrahls im Rahmen dieser Beschreibung der Winkel zwischen diesem Lichtstrahl und einer Senkrechten durch den Auftreffpunkt des Lichtstrahls auf einem Objekt verstanden, d.h. ein Einfallswinkel von 0° entspricht einem Lichteinfall senkrecht auf das jeweils beleuchtete Objekt, während ein Einfallswinkel von 90° einem streifenden Einfall parallel zu der Oberfläche des Objekts entspricht.

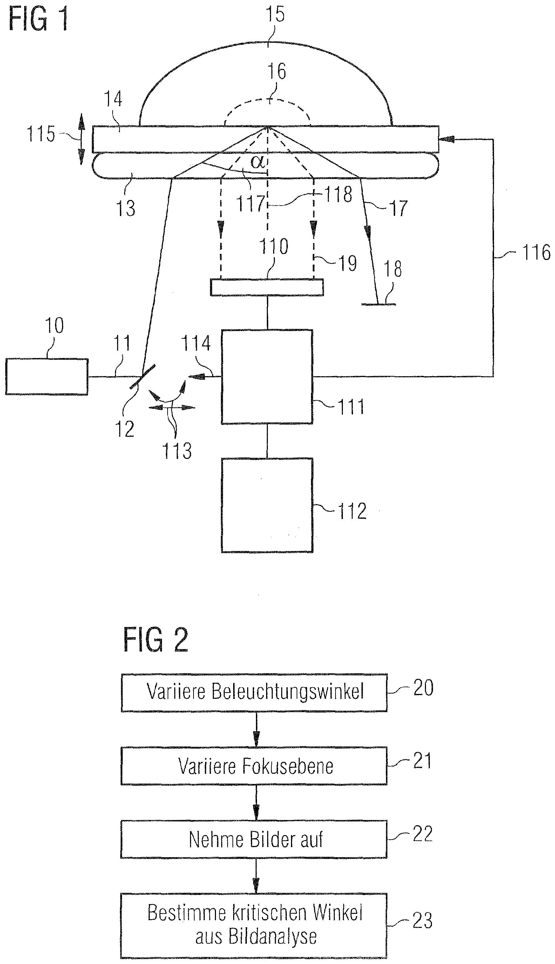

In Fig. 1 ist eine Vorrichtung zur TIRF-Mikroskopie gemäß einem Ausführungsbeispiel der Erfindung schematisch dargestellt. Es ist zu bemerken, dass die Fig. 1 lediglich als schematisch anzusehen ist und zur Veranschaulichung einiger Merkmale mancher Ausführungsbeispiele der Erfindung dienen soll. Es können jedoch weitere Elemente, insbesondere Linsen, Spiegel oder andere optische Elemente, welche in herkömmlichen TIRF-Mikroskopen Anwendung finden, auch bei dem Ausführungsbeispiel der Fig. 1 bereitgestellt sein.

Bei dem Ausführungsbeispiel der Fig. 1 erzeugt eine Lichtquelle 10, beispielsweise eine Laserlichtquelle, einen Anregungslichtstrahl 11. Der Anregungslichtstrahl 11 wird über einen Spiegel 12 zu einer Probenanordnung 13-15 gelenkt. Die Probenanordnung 13-15 umfasst insbesondere einen Objektträger 14 aus Glas oder einem anderen für den Anregungslichtstrahl 11 und von der Probe zu detektierenden Licht transparenten Material, auf welchem auf einer ersten Seite eine Probe 15, beispielsweise eine Suspension mit zu untersuchenden Teilchen, aufgebracht ist, und auf einer der ersten Seite gegenüberliegenden zweiten Seite, welche der Lichtquelle 10 zugewandt ist, eine Ölimmersionsschicht 13 aufgebracht ist. Der Anregungslichtstrahl 11 wird an der Grenzfläche zwischen dem umgebenden Medium (zum Beispiel Luft) und der Ölimmersionsschicht 13 gebrochen und trifft dann unter einem Einfallswinkel α 117 auf eine Grenzfläche zwischen Objektträger 14 und Probe 15. Bei dem dargestellten Ausführungsbeispiel sind die Brechungsindizes der Ölimmersionsschicht 13 des Objektträgers 14 derart gewählt, dass an der Grenzfläche zwischen Ölimmersionsschicht 13 und Objektträger 14 keine oder nur eine vernachlässigbare Brechung des Anregungslichtstrahls 11 stattfindet.

Der Anregungslichtstrahl 11 wird an der Grenzfläche zwischen Objektträger 14 und Probe 15 reflektiert und gelangt als reflektierter Lichtstrahl 17 schließlich zu einer Lichtfalle 18, welche den reflektierten Lichtstrahl 17 absorbiert. Bei anderen Ausführungsbeispielen kann der reflektierte Lichtstrahl 17 auch durch entsprechende Vorrichtungen analysiert werden, falls dies für eine bestimmte Anwendung hilfreich ist.

Übersteigt der Einfallswinkel 117 des Anregungslichtstrahls 11 auf die Grenzfläche zwischen Objektträger 14 und Probe 15 den für diese Grenzfläche geltenden Grenzwinkel der Totalreflexion, wird der Anregungslichtstrahl 11 vollständig reflektiert, und in der Probe 15 bildet sich ein so genanntes evaneszentes, exponentiell abklingendes Feld aus, welches in Fig. 1 schematisch gestrichelt dargestellt und mit dem Bezugszeichen 16 bezeichnet ist. Der Grenzwinkel der Totalreflexion hängt dabei insbesondere vom Brechungsindex des Objektträgers 14 und vom Brechungsindex der Probe 15 ab. Das evaneszente Feld 16 weist typischerweise eine Ausdehnung in der Größenordnung von 100 nm in Richtung senkrecht zu der oben erwähnten Grenzfläche auf (diese Richtung wird im Folgenden auch als z-Richtung bezeichnet), so dass auf diese Weise eine hohe Ortsauflösung in z-Richtung erreicht werden kann. Die z-Richtung entspricht also der Richtung der Senkrechten 118 in Fig. 1.

Der Anregungslichtstrahl 11 können die Probe 15 oder Teile hiervon insbesondere zur Fluoreszenz anregen. Entsprechendes Fluoreszenzlicht 19 geht von der Probe aus und wird bei dem Ausführungsbeispiel der Fig. 1 über einen Bildsensor 110, beispielsweise einen CCD-Sensor (Charged Coupled Device) oder einen CMOS-Sensor (Complementary Metal Oxide Semiconductor) detektiert, wobei dieser Bildsensor 110 gleichsam ein Fluoreszenzbild der Probe oder eines Teils hiervon aufnimmt, d.h. insbesondere ortsaufgelöst detektiert. Hierzu kann eine in Fig. 1 nicht dargestellte Abbildungsoptik, welche die Probe auf den Bildsensor 110 abbildet, und/oder eine entsprechende Filteranordnung, welche Licht in Wellenlängenbereichen, welches nicht der zu detektierenden Fluoreszenz entspricht, herausfiltern, bereitgestellt sein.

Die von dem Bildsensor 110 aufgenommene Information wird in einer Verarbeitungseinrichtung 111 verarbeitet, insbesondere wie im Folgenden näher beschrieben analysiert, um beispielsweise den Grenzwinkel der Totalreflexion zu bestimmen. Die Verarbeitungseinheit 111 kann dabei beispielsweise durch entsprechende Programmierung einer Prozessoreinrichtung mit einem oder mehreren Prozessoren, beispielsweise einem Computer, implementiert sein. Zudem ist eine Ein-/Ausgabeeinrichtung 112 bereitgestellt, über welche Informationen, beispielsweise über einen Bildschirm oder eine andere Anzeige, an eine Bedienperson ausgegeben werden können und/oder Daten durch die Bedienperson eingegeben werden können.

Bei dem dargestellten Ausführungsbeispiel ist der Spiegel 12 wie durch Pfeile 113 angedeutet sowohl schwenkbar als auch in einer Richtung parallel zu der oben erwähnten Grenzfläche bewegbar, um so den Einfallswinkel 117 variieren zu können. Der Spiegel 112 stellt dabei lediglich ein mögliches Beispiel für eine Einrichtung zur Änderung des Einfallswinkels dar, und es sind auch andere Implementierungen möglich. Beispielsweise kann ein verwendeter Spiegel nur translatorisch bewegbar sein, und es kann zusätzlich ein gekrümmter Spiegel, beispielsweise ein Hyperbolspiegel, bereitgestellt sein, wobei durch eine Translationsbewegung des Spiegels verschiedene Punkte des gekrümmten Spiegels beleuchtet werden und somit der einfallende Lichtstrahl unter verschiedenen Winkel von dem gekrümmten Spiegel auf die Grenzfläche zwischen Objektträger 14 und Probe 15 reflektiert wird, um so den Einfallswinkel 117 zu variieren.

Zu bemerken ist, dass bei dem Beispiel der Fig. 1 durch die Translationsbewegung des Spiegels 12 insbesondere eine Änderung des Orts, an welchem der Anregungslichtstrahl 11 auf die oben erwähnte Grenzfläche trifft, welche durch ein Verkippen des Spiegels 12 bewirkt wird, ausgeglichen werden kann.

Wie durch einen Pfeil 114 angedeutet, kann die Bewegung des Spiegels 12 oder einer anderen Einrichtung zum Ändern des Einfallswinkels von der Verarbeitungseinrichtung 111 gesteuert werden. Bei anderen Ausführungsbeispielen kann die Bedienung dieser Einrichtung auch manuell erfolgen, und die Verarbeitungseinrichtung 111 kann beispielsweise über die Ein-/Ausgabeeinrichtung 112 eine Bedienperson anweisen, den Einfallswinkel entsprechend zu verändern.

Zudem ist bei dem Ausführungsbeispiel der Fig. 1 der Objektträger 14 und somit die Probenanordnung 13, 14, 15, wie durch einen Pfeil 115 angedeutet, in z-Richtung verschiebbar. Hierdurch kann insbesondere eine Bildebene, in welcher die Fluoreszenz mittels des Bildsensors 110 detektiert wird, d.h. ein Bereich, aus dem eine scharfe Abbildung der Probe auf den Bildsensor erfolgt (Schärfentiefenbereich der Abbildung) in z-Richtung verschoben werden. Alternativ hierzu kann auch der Bildsensor 110 in z-Richtung verschoben werden, oder es kann eine (in Fig. 1 nicht dargestellte) Abbildungsoptik zwischen dem Bildsensor 110 und der Probe 15 entsprechend verändert werden, um die Bildebene, d.h. die Aufnahmeebene, des Bildsensors 110 zu verändern.

Auch diese Verstellung kann wie durch einen Pfeil 116 angedeutet gesteuert durch die Verarbeitungseinrichtung 111 gesteuert durchgeführt werden. Bei anderen Ausführungsbeispielen kann auch hier die Verstellung manuell durch eine Bedienperson erfolgen, wobei die Verarbeitungseinrichtung 111 über die Ein-/Ausgabeeinrichtung 112 beispielsweise Anweisungen zur Veränderung der Position des Objektträgers 14 in z-Richtung geben kann.

Zur Bestimmung des Grenzwinkels der Totalreflexion ist die Vorrichtung der Fig. 1 eingerichtet, automatisch oder interaktiv mithilfe einer Bedienperson den Einfallswinkel 117 zu variieren und durch Analyse der bei den verschiedenen Einfallswinkeln 117 mithilfe des Bildsensors 110 aufgenommenen Bildern den Grenzwinkel der Totalreflexion zu bestimmen. Zusätzlich wird, beispielsweise durch Bewegen des Objektträgers 14, die Bildebene variiert und Bilder bei verschiedenen Bildebenen werden zusätzlich zur Bestimmung des Grenzwinkels der Totalreflexion herangezogen. Dabei kann insbesondere ein Kontrast der Bilder ausgewertet werden, Informationen an verschiedenen Stellen des Bildes können ausgewertet werden und/oder Informationen für verschiedene Bildebenen können verglichen werden. Details hierzu werden später näher erläutert.

In Fig. 2 ist ein entsprechendes Verfahren dargestellt, welches beispielsweise in der Vorrichtung der Fig. 1 implementiert sein kann, jedoch auch unabhängig hiervon realisierbar ist.

In Schritt 20 wird ein Beleuchtungswinkel, d.h. ein Einfallswinkel eines Anregungslichtstrahls, auf eine Grenzfläche zu einer Probe variiert. Beim Verändern des Beleuchtungswinkels bleibt bevorzugt der Richtungsvektor möglichst konstant. In Schritt 21 wird zusätzlich eine Bildebene einer Bilddetektion variiert. In Schritt 22, welcher bei einem Ausführungsbeispiel für jeden Beleuchtungswinkel und für jede Fokusebene der Schritte 20 und 21 stattfindet, werden entsprechende Bilder aufgenommen. In Schritt 23 wird ein kritischer Winkel der Totalreflexion aus einer Analyse der aufgenommenen Bilder bestimmt, beispielsweise durch Analyse des Bildkontrastes.

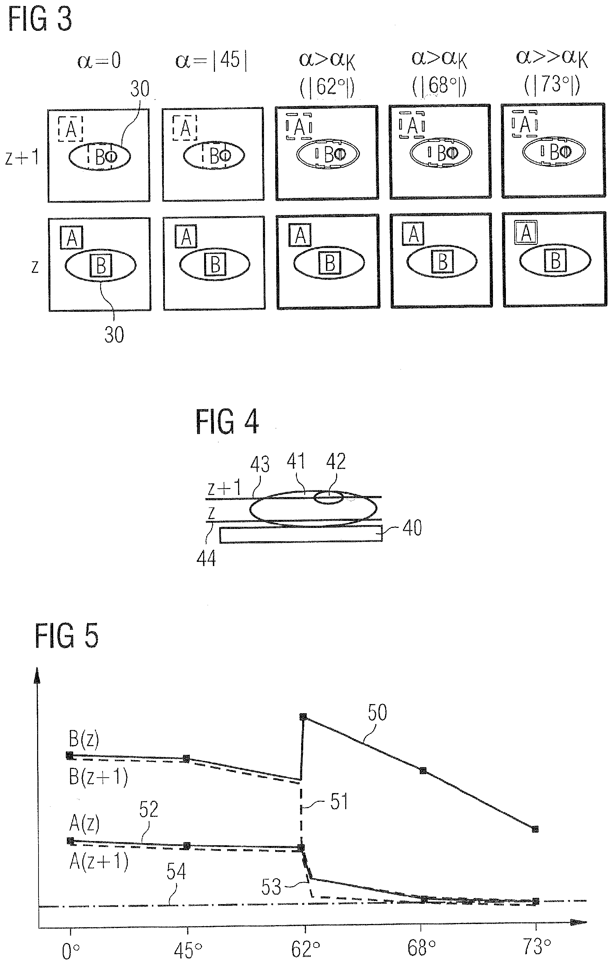

Verschiedene Möglichkeiten zur Bestimmung des kritischen Winkels werden nunmehr unter Bezugnahme auf Fig. 3-7 erläutert.

In Fig. 3 sind schematische Beispielbilder, welche durch einen Bildsensor wie den Bildsensor 110 der Fig. 1 aufgenommen werden, dargestellt. In Fig. 4 ist zur Veranschaulichung eine entsprechende Probe mit einer Bildebene z 44 und einer Bildebene z+1 43 dargestellt. In Fig. 4 ist mit 40 ein Objektträger bezeichnet, auf dem sich eine Probe 41 mit einem Objekt 42, welches nur in der Bildebene 43 vorhanden ist, aufgebracht ist.

Der Abstand zwischen den Bildebenen 43, 44 ist dabei so gewählt, dass bei Vorliegen der Totalreflexion das evaneszente Feld nicht bis in die Bildebene 43 reicht, d.h. ein Schärfentiefenbereich bei einer Aufnahme der Bildebene 43 das evaneszente Feld nicht erfasst. Dies bedingt ein unterschiedliches Verhalten für die beiden Bildebenen, wie nunmehr erläutert werden wird.

Der Abstand zwischen den Bildebenen 43 und 44 ist also derart gewählt, dass er größer ist als die Eindringtiefe des evaneszenten Felds, so dass die Bildebene 43 außerhalb des evaneszenten Felds liegt.

In der oberen Reihe der Fig. 3 sind Aufnahmen in der Bildebene z+1, d.h. der Bildebene 43 der Fig. 4, schematisch dargestellt, und in der unteren Reihe sind Aufnahmen in der Bildebene z, d.h. der Bildebene 44, dargestellt. Mit 30 ist in Fig. 3 ein Bereich gekennzeichnet, in welchem bei Überschreiten des Grenzwinkels der Totalreflexion das evaneszente Feld innerhalb der Probe 41 der Fig. 3 vorliegt.

In den Spalten der Fig. 3 sind Bilder für verschiedene Einfallswinkel α dargestellt, nämlich α=0, α=45°, α=62°, α=68° und α=73°. Der kritische Grenzwinkel α_{κ} der Totalreflexion liegt bei diesem Beispiel etwas unterhalb 62°.

Zur Bestimmung des Grenzwinkels der Totalreflexion werden in dem dargestellten Beispiel zwei Bereiche betrachtet, welche in Fig. 3 mit A und B bezeichnet sind, wobei der Bereich B innerhalb des Bereichs 30 liegt und der Bereich A außerhalb des Bereichs 30 liegt.

In den in Fig. 3 dargestellten Bildern bedeutet eine helle Färbung eine hohe Lichtintensität, insbesondere Fluoreszenzintensität, welche durch den jeweiligen Bildsensor detektiert wird, während eine dunkle Färbung eine niedrige Intensität bedeutet.

Für Winkel α kleiner dem kritischen Winkel erscheint in Fig. 3 das gesamte Bild mit Ausnahme des Elements 42 hell. Dies entspricht den ersten beiden Spalten in Fig. 3. Wird der kritische Winkel unterschritten, erscheint in der Bildebene z+1 das gesamte Bild dunkel. Das liegt daran, dass in diesem Fall der einfallende Lichtstrahl totalreflektiert wird und in der Bildebene z+1 auch kein evaneszentes Feld vorliegt, so dass hier keine Anregung erfolgt und somit von der Probe kein Licht, insbesondere kein Fluoreszenzlicht, ausgesendet wird.

In der Bildebene 44, d.h. der Bildebene z, wird hingegen bei Überschreiten des kritischen Winkels (letzte Spalte in Fig. 3) das Signal außerhalb des Bereichs 30 schwächer, während das Signal im Bereich 30 zunächst sogar etwas ansteigt und dann langsam abfällt. Dies liegt daran, dass bei Überschreiten des kritischen Winkels im Wesentlichen nur noch im Bereich 30 ein evaneszentes Feld vorliegt, welches für die Anregung sorgen kann. Mit zunehmendem Einfallswinkel wird dieses evaneszente Feld schwächer und somit nimmt auch die Intensität im Bereich 30 langsam ab.

Diese Ergebnisse sind in Fig. 5 graphisch dargestellt. Eine Kurve 50 zeigt dabei einen Verlauf des densiometrischen Mittelwerts der Intensität in dem Bereich B für die Bildebene z, eine Kurve 51 zeigt den Verlauf für den Bereich B in der Bildebene z+1, eine Kurve 52 zeigt den Verlauf für den Bereich A in der Bildebene z und eine Kurve 53 zeigt den Verlauf für den Bereich A in der Bildebene z+1. Eine Linie 54 gibt das Dunkelrauschen des verwendeten Bildsensors an.

Wie zu sehen ist, weisen die Kurven alle beim kritischen Winkel eine starke Veränderung auf, wobei die Kurve 50 ansteigt, um dann wieder abzufallen, während alle anderen Kurven direkt beim kritischen Winkel bereits stark abfallen.

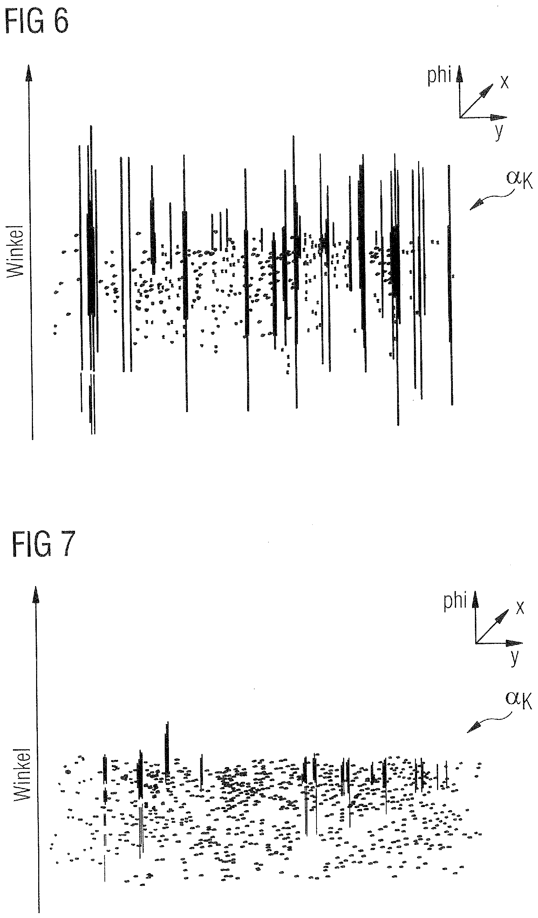

Zur weiteren Veranschaulichung sind in Fig. 6 und 7 weitere Messungen gezeigt, wobei die Messung der Fig. 6 in der Bildebene z gemessen wurde, während die Messung in Fig. 7 der Bildebene z+1, d.h. außerhalb des evaneszenten Felds, entspricht.

In den Fig. 6 und 7 ist in vertikaler Richtung der Einfallswinkel des anregenden Lichtstrahls ausgegeben. Die Linien zeigen eine Intensitätsverteilung in einer y-Richtung, d.h. in der Bildebene des verwendeten Bildsensors, die "Punkte" zwischen den Linien entsprechen Hintergrundsignalen. Das Signal, repräsentiert durch die Linien, kommt bei dem vorliegenden Beispiel von fluoreszierenden Beads mit 1,2 µm Durchmesser, während das Hintergrundsignal beispielsweise von Fluoreszin und fluoreszierenden Markern in der Flüssigkeit, in welcher sich die Beads befinden, herrührt. Wie zu erkennen, nimmt in Fig. 6 beim Überschreiten des kritischen Winkels (mit α_{κ} markiert) das Hintergrundsignal stark ab, während das Signal von den Beads bestehen bleibt. In Fig. 7 fällt hingegen beim Überschreiten des kritischen Winkels sowohl der Hintergrund als auch das eigentliche Signal stark ab.

Aus den oben erläuterten Eigenschaften der aufgenommenen Bilder mit variierender Bildebene und variierendem Einfallswinkel ergeben sich verschiedene Möglichkeiten zur Bestimmung des kritischen Winkels. In einem einfachen Fall kann einfach der Knick bzw. die Stufe in den verschiedenen Graphen der Fig. 5 betrachtet werden. Bei einem anderen Ausführungsbeispiel werden die Bildintensitäten I_{z}/I_{z+1} entlang einer oder mehrerer Linienprofile oder anhand von Gesamtbildern betrachtet, wobei I die Intensität bezeichnet, I_{z} die Intensität eines Linienprofils oder des Gesamtbilds für die Bildebene z und I_{z+1} die entsprechende Größe für die Bildebene z+1. Durch den starken Rückgang bei Überschreiten des kritischen Winkels in der Bildebene z+1 in Verbindung mit dem Konstantbleiben oder sogar Anstieg in der Bildebene z ergibt sich beim Überschreiten des kritischen Winkels ein starkes Ansteigen dieses Verhältnisses, welches detektiert werden kann.

Zusätzlich oder alternativ kann, um insbesondere die Probenunabhängigkeit zu verbessern (beispielsweise um einen Einfluss eines Ausbleichens der Probe zu verringern), in einem ersten Schritt ein Verhältnis Iₐ zu Iₐ₊₁ ermittelt werden, wobei I die Fluoreszenzintensität eines interessierenden Bereichs oder des gesamten Bilds darstellt und a einen Index einer Messung für einen bestimmten Einfallswinkel darstellt, d.h. a+1 bezeichnet die Messung mit den nächstgrößeren Einfallswinkel verglichen mit der Messung a. Dies geschieht dabei z.B. in der Bildebene z. Auch hier ergibt sich eine Änderung des Verhältnisses bei dem Überschreiten des kritischen Winkels. Schließlich ist es möglich, insbesondere zur Feineinstellung, zwei Bereiche in einem Bild, insbesondere einem Bereich in einem zu vermessenden Probebereich und einem Bereich, dessen Signal durch die Beleuchtung mit einem Einfallswinkel über dem kritischen Winkel unterdrückt werden kann, auszuwerten, beispielsweise Bereiche B und A in Fig. 3, beispielsweise die gesamten Bereiche oder Linienprofile in dem jeweiligen Bereich. Auch ein außerhalb des Fokus liegender Bereich kann für den Bereich A, d.h. den nicht zur späteren Messung interessierenden Bereich, gewählt werden. Wird hier für die Bildebene z das Verhältnis der Intensitäten gebildet, ergibt sich ebenfalls beim Überschreiten des kritischen Einfallswinkels eine Änderung um einen gewissen Faktor. Hier kann beispielsweise ein Schwellenwert festgelegt werden, und übersteigt dieser Faktor von einem Einfallswinkel zum nächsten den vorgegebenen Schwellenwert, entspricht dies einer Detektion des kritischen Winkels. Der Schwellenwert kann beispielsweise durch einen Benutzer festgelegt werden oder auf einen typischen Wert, zum Beispiel auf einen Wert von 10, gesetzt werden.

Somit wurden verschiedene Möglichkeiten bereitgestellt, wie der kritische Winkel auf Basis von Kontrastinformationen zu analysierenden Bildern, beispielsweise auf Basis von Intensitätsverhältnissen, bestimmt werden kann.

Die obigen Verfahren können auch miteinander kombiniert werden, beispielsweise um ein mit einem der Verfahren erhaltenes Ergebnis mit einem anderen der Verfahren zu verifizieren.

Die obigen Vorrichtung und Verfahren sind lediglich als Beispiel zu verstehen. Beispielsweise wird bei der Vorrichtung der Fig. 1 das von der Probe 15 ausgehende Fluoreszenzlicht auf der gleichen Seite detektiert, von der aus auch der Anregungslichtstrahl 11 eingestrahlt wird. Bei anderen Ausführungsbeispielen kann das Fluoreszenzlicht auf der gegenüberliegenden Seite detektiert werden. Zudem ist die vorliegenden Erfindung nicht auf die Detektion von Fluoreszenzlicht beschränkt, sondern es kann allgemein von der Probe in Antwort auf den Anregungslichtstrahl abgestrahltes Licht, beispielsweise auch Raman-gestreutes Licht, detektiert werden.

Somit ist die Erfindung nicht auf die dargestellten Ausführungsbeispiele beschränkt.

## Patentansprüche

1. Verfahren zum Bestimmen eines kritischen Winkels der Totalreflexion bei der TIRF-Mikroskopie, umfassend:
Beleuchten einer Probe (15) mit einem Anregungslichtstrahl (11),
Aufnehmen von Fluoreszenz-Bildern zumindest eines Teils der Probe (15) bei einer Vielzahl von verschiedenen Einfallswinkeln (117) des Anregungslichtstrahls (11), und
Bestimmen eines kritischen Winkels der Totalreflexion an einer Grenzfläche der Probe (15) auf Basis einer Analyse der Bilder,
wobei das Bestimmen des kritischen Winkels auf Basis von Kontrastinformationen der Bilder vorgenommen wird,
**dadurch gekennzeichnet,**
**dass** das Aufnehmen von Bildern ein Aufnehmen von Bildern für mindestens zwei unterschiedliche Bildebenen (43, 44) umfasst.

2. Verfahren nach Anspruch 1, wobei das Bestimmen des kritischen Winkels ein Auswerten von Verhältnissen einer Lichtintensität in einem vorgegebenen Bereich von Bildern mit benachbarten Einfallswinkeln umfasst.

3. Verfahren nach einem der Ansprüche 1 oder 2, wobei das Bestimmen des kritischen Winkels ein Auswerten von Intensitätsverhältnissen zwischen einem ersten Bildbereich innerhalb eines zu untersuchenden Bereichs (30) und einem zweiten Bildbereich außerhalb des zu untersuchenden Bereichs (30) der Bilder umfasst.

4. Verfahren nach einem der Ansprüche 1-3, wobei ein Abstand der mindestens zwei Bildebenen größer als eine Eindringtiefe eines evaneszenten Felds, wenn der Einfallswinkel den kritischen Winkel überschreitet, ist.

5. Verfahren nach einem der Ansprüche 1-4, wobei das Bestimmen des kritischen Winkels ein Vergleichen von Bereichen in Bildern bei gleichen Einfallswinkeln in unterschiedlichen Bildebenen umfasst.

6. Verfahren nach einem der Ansprüche 1-5, wobei das Bestimmen des kritischen Winkels ein Vergleichen eines Intensitätsverhältnisses auf Basis der Vielzahl von Bildern mit einem Schwellenwert umfasst.

7. Verfahren nach einem der Ansprüche 1-6, wobei die Vielzahl von Einfallswinkeln automatisch eingestellt wird.

8. TIRF-Mikroskopievorrichtung zur Bestimmung eines kritischen Winkels der Totalreflexion an einer Grenzfläche einer Probe, umfassend:
eine Beleuchtungseinrichtung (10, 12) zum Beleuchten einer Probe (15) unter einem Einfallswinkel (117),
eine Bildaufnahmeeinrichtung (110) zum Aufnehmen von Fluoreszenz-Bildern der Probe, und
eine Auswerteeinrichtung (111) zum Bestimmen des kritischen Winkels der Totalreflexion an einer Grenzfläche der Probe (15) auf Basis einer Analyse von bei einer Vielzahl verschiedener Einfallswinkel (117) aufgenommener Bilder,
wobei das Bestimmen des kritischen Winkels auf Basis von Kontrastinformationen der Bilder vorgenommen wird,
**dadurch gekennzeichnet,**
**dass** die Bildaufnahmeeinrichtung (110) eingerichtet ist, Fluoreszenz-Bilder für mindestens zwei unterschiedliche Bildebenen aufzunehmen.

9. Vorrichtung nach Anspruch 8, wobei die Bildaufnahmeeinrichtung (110) einen CCD-Sensor oder einen CMOS-Sensor umfasst.

10. Vorrichtung nach Anspruch 8 oder 9, wobei die Vorrichtung zur Durchführung des Verfahrens nach einem der Ansprüche 1-7 eingerichtet ist.

## Claims

1. Method for determining a critical angle of the total internal reflection in TIRF microscopy, comprising:
illuminating a sample (15) with an excitation light beam (11),
recording fluorescence images of at least one part of the sample (15) for a multiplicity of different angles of incidence (117) of the excitation light beam (11), and
determining a critical angle of the total internal reflection at an interface of the sample (15) on the basis of an analysis of the images, wherein the critical angle is determined on the basis of contrast information of the images,
**characterized**
**in that** recording images comprises recording images for at least two different image planes (43, 44).

2. Method according to Claim 1, wherein determining the critical angle comprises evaluating the ratios of a light intensity in a specified region of images with neighbouring angles of incidence.

3. Method according to either of Claims 1 or 2, wherein determining the critical angle comprises evaluating intensity ratios between a first image region, inside a region (30) to be examined, and a second image region, outside the region (30) to be examined, of the images.

4. Method according to any of Claims 1-3, wherein a spacing of the at least two image planes is greater than a penetration depth of an evanescent field when the angle of incidence exceeds the critical angle.

5. Method according to any of Claims 1-4, wherein determining the critical angle comprises comparing regions in images in different image planes for equal angles of incidence.

6. Method according to any of Claims 1-5, wherein determining the critical angle comprises comparing an intensity ratio with a threshold value, on the basis of the multiplicity of images.

7. Method according to any of Claims 1-6, wherein the multiplicity of angles of incidence are set automatically.

8. TIRF microscopy device for determining a critical angle of the total internal reflection at an interface of a sample, comprising:
an illumination apparatus (10, 12) for illuminating a sample (15) at an angle of incidence (117),
an image recording apparatus (110) for recording fluorescence images of the sample, and
an evaluation apparatus (111) for determining the critical angle of the total internal reflection at an interface of the sample (15) on the basis of an analysis of images recorded for a multiplicity of different angles of incidence (117),
wherein the critical angle is determined on the basis of contrast information of the images,
**characterized**
**in that** the image recording apparatus (110) is set up to record fluorescence images for at least two different image planes.

9. Device according to Claim 8, wherein the image recording apparatus (110) comprises a CCD sensor or a CMOS sensor.

10. Device according to Claim 8 or 9, wherein the device is set up to carry out the method according to any of Claims 1-7.

## Revendications

1. Procédé de détermination d'un angle critique de réflexion totale interne en microscopie TIRF, comprenant :
l'éclairage d'un échantillon (15) par un faisceau lumineux d'excitation (11),
l'acquisition d'images de fluorescence d'au moins une partie de l'échantillon (15) sous plusieurs angles d'incidence différents (117) du faisceau lumineux d'excitation (11), et
la détermination d'un angle critique de réflexion totale à une interface de l'échantillon (15) sur la base d'une analyse des images,
dans lequel la détermination de l'angle critique est effectuée sur la base d'informations de contraste des images,
**caractérisé en ce que** l'acquisition d'images comprend une acquisition d'images pour au moins deux plans d'image différents (43, 44).

2. Procédé selon la revendication 1, dans lequel la détermination de l'angle critique comprend une évaluation de rapports d'une intensité lumineuse dans une région prédéterminée d'images correspondant à des angles d'incidence adjacents.

3. Procédé selon l'une des revendications 1 ou 2, dans lequel la détermination de l'angle critique comprend une évaluation de rapports d'intensité entre une première région d'image à l'intérieur d'une région (30) à examiner et une deuxième région d'image à l'extérieur de la région (30) à examiner des images.

4. Procédé selon l'une des revendications 1 à 3, dans lequel une distance entre lesdits au moins deux plans d'image est supérieure à une profondeur de pénétration d'un champ évanescent lorsque l'angle d'incidence dépasse l'angle critique.

5. Procédé selon l'une des revendications 1 à 4, dans lequel la détermination de l'angle critique comprend une comparaison de régions dans des images correspondant à des angles d'incidence égaux dans différents plans d'image.

6. Procédé selon l'une des revendications 1 à 5, dans lequel la détermination de l'angle critique comprend une comparaison d'un rapport d'intensité sur la base de la pluralité d'images à une valeur de seuil.

7. Procédé selon l'une des revendications 1 à 6, dans lequel la pluralité d'angles d'incidence est automatiquement ajustée.

8. Dispositif de microscopie TIRF pour la détermination d'un angle critique de réflexion totale à une interface d'un échantillon, comprenant :
un dispositif d'éclairage (10, 12) pour éclairer un échantillon (15) sous un angle d'incidence (117),
un dispositif d'acquisition d'images (110) pour l'acquisition d'images de fluorescence de l'échantillon, et
un dispositif d'évaluation (111) pour déterminer l'angle critique de la réflexion totale à une interface de l'échantillon (15) sur la base d'une analyse d'images acquises sous plusieurs angles d'incidence différents (117),
dans lequel la détermination de l'angle critique est effectuée sur la base d'informations de contraste des images,
**caractérisé en ce que** le dispositif d'acquisition d'images (110) est conçu pour acquérir des images de fluorescence pour au moins deux plans d'image différents.

9. Dispositif selon la revendication 8, dans lequel le dispositif d'acquisition d'images (110) comprend un capteur CCD ou un capteur CMOS.

10. Dispositif selon la revendication 8 ou 9, dans lequel le dispositif est a conçu pour mettre en œuvre le procédé selon l'une des revendications 1 à 7.
